# EUROPEAN PATENT APPLICATION

(11) **EP 4 718 551 A1**
(43) Date of publication of application: **01.04.2026**
(21) Application number: 25193457.6
(22) Date of filing: 01.08.2025
(51) Int. Cl.: H01M 10/04, H01M 50/474, H01M 50/538, H01M 50/528, H01M 50/645, H01M 50/477

(54) **SECONDARY BATTERY, BATTERY PACK AND ELECTRONIC DEVICE**

(30) Priority: 25.09.2024 CN 202422343122 U
(71) Applicant: AESC Japan Ltd., Yokohama-Shi, Kanagawa 220-0012 (JP)
(72) Inventor: QIAN, Jia, Jiangyin City, Wuxi City, 214443 (CN)
(74) Representative: Becker, Eberhard

(57) **Abstract**

A secondary battery (100), a battery pack (200), and an electronic device (300) are provided. The secondary battery (100) includes a casing (110), an electrode assembly (120), a current-collecting member (130), and a sealing plate (160). The casing (110) includes a side wall (111) and a cover plate assembly (140). The side wall (111) includes an opening (112) sealed by the cover plate assembly (140). The electrode assembly (120) mounted in the casing (110) has a winding cell through hole (121). The current-collecting member (130) is electrically connected to the electrode assembly (120) and the casing (110). The sealing plate (160) is arranged on a side of the cover plate assembly (140) away from the electrode assembly (120). The cover plate assembly (140) is provided with a liquid injection hole (170). The sealing plate (160) seals the liquid injection hole (170).

## Description

### BACKGROUND

### Technical Field

The disclosure relates to the technical field of batteries, and in particular, relates to a secondary battery, a battery pack, and an electronic device.

### Description of Related Art

In the related art, the center liquid injection approach is adopted most of the time for secondary batteries. That is, the liquid injection hole is arranged at the position of the winding cell through hole of an electrode assembly. With this liquid injection approach, when liquid is injected into the inner portion of the casing, the electrolyte with a high flow rate may directly rush into the inner portion of the winding cell through hole. It is thus easy to cause local collapse at the position of the winding cell through hole, so the integrity of the electrode sheet interface is affected, and the charge and discharge performance and cycle stability of the secondary battery are further reduced. Meanwhile, during the liquid injection process, when the electrolyte flows inside the secondary battery, it needs to first penetrate the separator and then pass through the separator to penetrate the electrode sheet, which also causes the wetting speed of the electrode assembly to be limited.

### SUMMARY

The disclosure provides a secondary battery, a battery pack, and an electronic device aiming to improve the technical problem that the position of a winding cell through hole of an electrode assembly is prone to collapse during the liquid injection process.

To achieve the above and other related purposes, the disclosure provides a secondary battery including a casing, an electrode assembly, a current-collecting member, and a sealing plate. The casing includes a side wall and a cover plate assembly. The side wall includes an opening at one end in an axial direction of the secondary battery, and the cover plate assembly seals the opening. The cover plate assembly includes a first cover plate and a second cover plate. The first cover plate covers the opening, is sealingly connected to the side wall, and includes a first through hole. The second cover plate at least partially blocks the first through hole and is welded to the first cover plate. The electrode assembly is sealingly mounted in the casing and has a winding cell through hole. The current-collecting member is arranged on a side of the electrode assembly facing the cover plate assembly and is electrically connected to the electrode assembly and the casing. The sealing plate is arranged on a side of the second cover plate away from the electrode assembly. The first cover plate and/or the second cover plate is provided with a liquid injection hole. In the axial direction of the secondary battery, a projection of the liquid injection hole is located at an outer periphery of the winding cell through hole, and the sealing plate seals the liquid injection hole.

In an embodiment of the disclosure, the liquid injection hole includes a second through hole arranged in the second cover plate. At least a portion of the second through hole is exposed to the first through hole, and at least another portion communicates with an end surface of the electrode assembly located on a side of the opening.

In an embodiment of the disclosure, in the axial direction of the secondary battery, the second cover plate is arranged between the first cover plate and the current-collecting member, and an outer edge of the second cover plate abuts against an outer periphery of the first through hole. A surface of the first cover plate facing the electrode assembly at least partially blocks the second through hole.

In an embodiment of the disclosure, the second through hole extends in a radial direction of the secondary battery and penetrates the outer edge of the second cover plate.

In an embodiment of the disclosure, in the axial direction of the secondary battery, the second cover plate is arranged between the first cover plate and the current-collecting member, and an outer edge of the second cover plate abuts against an outer periphery of the first through hole. The liquid injection hole includes a through groove arranged in the first cover plate and/or the second cover plate. One end of the through groove communicates with the first through hole, and the other end extends in a radial direction of the secondary battery and communicates with an end surface of the electrode assembly located on a side of the opening.

In an embodiment of the disclosure, the through groove includes a second recess arranged in the second cover plate. The second recess is located on a side of the second cover plate facing the first cover plate, and at least a portion of the second recess is exposed to the first through hole.

In an embodiment of the disclosure, the through groove includes a first recess arranged in the first cover plate. The first recess is located on a side of the first cover plate facing the second cover plate, and the first recess communicates with the first through hole.

In an embodiment of the disclosure, the current-collecting member includes a current-collecting body and a cover plate welding portion welded to the second cover plate to form a first welding mark. The first welding mark is spaced apart from the liquid injection hole, and a surface of the first welding mark is coated with a sealing adhesive.

In an embodiment of the disclosure, the sealing plate covers the first welding mark.

In an embodiment of the disclosure, a thickness of the cover plate welding portion is greater than a thickness of the current-collecting body. The cover plate welding portion protrudes toward a side of the second cover plate relative to the current-collecting body. A center region of the cover plate welding portion includes a center hole communicating with the winding cell through hole. An edge region of the cover plate welding portion includes a third recess, and both ends of the third recess communicate with the liquid injection hole and the center hole.

The disclosure further provides a battery pack, and the battery pack includes the secondary battery according to any one of the above.

The disclosure further provides an electronic device, and the electronic device includes the battery pack according to the above.

In the secondary battery provided by the disclosure, in the axial direction of the secondary battery, since the projection of the liquid injection hole is located at the outer periphery of the winding cell through hole, offset arrangement of the liquid injection hole and the winding cell through hole in the radial direction is implemented. Through such an arrangement, when electrolyte is injected through the liquid injection hole, the impact force generated by the highspeed electrolyte is absorbed by the current-collecting member or the end surface of the electrode assembly at the position directly opposite to the liquid injection hole. In this way, the liquid flow impact on the position of the winding cell through hole is reduced, the probability of collapse at the position of the winding cell through hole is correspondingly lowered, and the integrity of the electrode sheet interface at that position is improved, so that the charge-discharge performance and cycle stability of the secondary battery are enhanced.

### BRIEF DESCRIPTION OF THE DRAWINGS

To make the technical solutions provided in the embodiments of the disclosure or the related art more clearly illustrated, several accompanying drawings required by the embodiments or the related art for description are briefly introduced as follows. Obviously, the drawings in the following description are merely some embodiments of the disclosure, and for a person having ordinary skill in the art, other embodiments can be obtained based on these drawings without inventive effort.
FIG. 1 is a cross-sectional view of an overall structure of a secondary battery according to an embodiment of the disclosure.
FIG. 2 is a local enlargement view of a region A in FIG. 1.
FIG. 3 is a local cross-sectional view of a second through hole formed in a second cover plate of the secondary battery according to an embodiment of the disclosure.
FIG. 4 is a schematic view of a structure of the second cover plate in FIG. 3.
FIG. 5 is a local cross-sectional view of the second through hole formed in the second cover plate of the secondary battery according to another embodiment of the disclosure.
FIG. 6 is a schematic view of the structure of the second cover plate in FIG. 5.
FIG. 7 is a schematic view of a liquid injection hole of the secondary battery at a first through hole after a sealing plate is removed according to an embodiment of the disclosure.
FIG. 8 is a local cross-sectional view of a through groove arranged in the second cover plate of the secondary battery according to an embodiment of the disclosure.
FIG. 9 is a local three-dimensional cross-sectional view of the through groove arranged in the second cover plate of the secondary battery according to an embodiment of the disclosure.
FIG. 10 is a schematic view of a structure of a first recess arranged in the second cover plate of the secondary battery according to an embodiment of the disclosure.
FIG. 11 is a schematic view of the structure of the first recess arranged in the second cover plate of the secondary battery according to another embodiment of the disclosure.
FIG. 12 is a local cross-sectional view of a second recess arranged in a first cover plate of the secondary battery according to an embodiment of the disclosure.
FIG. 13 is a schematic three-dimensional view of a structure the first cover plate of the secondary battery in one angular direction according to an embodiment of the disclosure.
FIG. 14 is a schematic three-dimensional view of the structure the first cover plate of the secondary battery in another angular direction according to an embodiment of the disclosure.
FIG. 15 is a schematic view of a structure of the through groove at the first through hole after the sealing plate of the secondary battery is removed according to an embodiment of the disclosure.
FIG. 16 is a schematic view of an overall structure of a current-collecting member of the secondary battery according to an embodiment of the disclosure.
FIG. 17 is a schematic view of the overall structure of the current-collecting member of the secondary battery with a third recess arranged thereon according to an embodiment of the disclosure.
FIG. 18 is a local cross-sectional view of the current-collecting member of the secondary battery arranged in the third recess according to an embodiment of the disclosure.
FIG. 19 is a schematic view of the structure of the current-collecting member of the secondary battery without a cover plate welding portion arranged thereon according to an embodiment of the disclosure.
FIG. 20 is a schematic cross-sectional view of the current-collecting member of the secondary battery without a cover plate welding portion arranged thereon according to an embodiment of the disclosure.
FIG. 21 is schematic view of distribution of a first welding mark on the second cover plate of the secondary battery according to an embodiment of the disclosure.
FIG. 22 is a schematic view of an overall structure of a battery pack according to an embodiment of the disclosure.
FIG. 23 is a schematic view of the structure of the battery pack mounted on a vehicle according to an embodiment of the disclosure.

Description of reference numerals of the elements:
100: secondary battery, 110: casing, 111: side wall, 112: opening, 113: end wall, 120: electrode assembly, 121: winding cell through hole, 122: first tab, 123: second tab, 124: gas storage space, 130: current-collecting member, 131: current-collecting body, 132: cover plate welding portion, 1321: center hole, 1322: third recess, 140: cover plate assembly, 141: first cover plate, 1411: first through hole, 1412: first protrusion, 1413: cover portion, 1414: second protrusion, 142: second cover plate, 1421: first welding mark, 150: electrode terminal, 160: sealing plate, 170: liquid injection hole, 171: second through hole, 1711: penetrating opening, 172: through groove, 1721: second recess, 17211: recess opening, 1722: first recess, 200: battery pack, 210: box, 211: first box portion, 212: second box portion, 300: electronic device, and 310: working portion.

### DESCRIPTION OF THE EMBODIMENTS

The implementation of the disclosure is illustrated below by specific embodiments. A person having ordinary skill in the art can easily understand other advantages and effects of the disclosure from the content disclosed in this specification. The disclosure can also be implemented or applied through other different specific implementation ways. The details in this specification can also be modified or changed based on different viewpoints and applications without departing from the spirit of the disclosure. Note that the following embodiments and the features in the embodiments may be combined with each other in the case of no conflict. It should also be understood that the terminology used in the embodiments of the disclosure is for describing a specific implementation, but not for limiting the protection scope of the disclosure. The test methods for which specific conditions are not indicated in the following embodiments are usually in accordance with conventional conditions or in accordance with the conditions suggested by each manufacturer.

When the numerical ranges are given in the embodiments, it should be understood that, unless otherwise stated in the disclosure, the two endpoints of each numerical range and any numerical value between the two endpoints may be selected. Unless otherwise defined, all technical and scientific terms used in the disclosure are consistent with the grasp of the prior art by a person having ordinary skill in the art and the content of the disclosure. Any method, device, and material in the prior art similar or equivalent to the methods, devices, and materials described in the embodiments of the disclosure may also be used to implement the disclosure.

It should be noted that terms such as "upper", "lower", "left", "right", "middle" and "one" quoted in this specification are only for the convenience of description and are not used to limit the applicable scope of the disclosure. The change or adjustment of its relative relationship should also be regarded as the applicable scope of the disclosure without substantive change of the technical content.

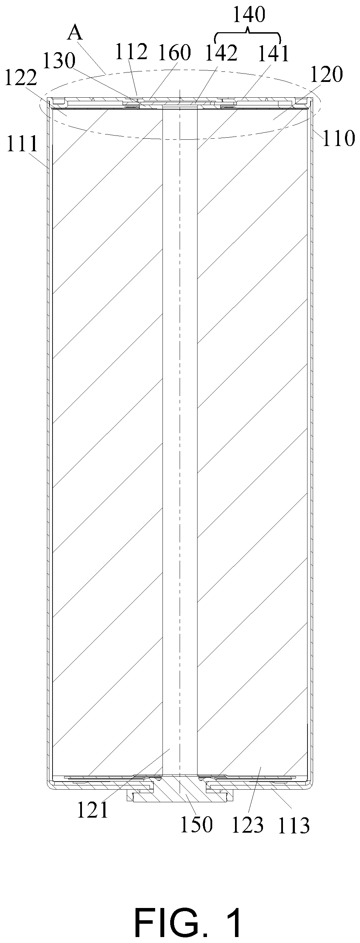

Referring to FIG. 1 to FIG. 23, the disclosure provides a secondary battery 100, a battery pack 200, and an electronic device 300. In the secondary battery 100, a projection of a liquid injection hole 170 is located at an outer periphery of a winding cell through hole 121, so that offset arrangement of the liquid injection hole 170 and the winding cell through hole 121 in a radial direction may be implemented. In this way, during a liquid injection process, electrolyte may be prevented from directly rushing into the winding cell through hole 121. As such, a liquid flow impact on a position of the winding cell through hole 121 is lowered, probability of collapse at the position of the winding cell through hole 121 is reduced, and charge-discharge performance and cycle stability of the secondary battery 100 are improved.

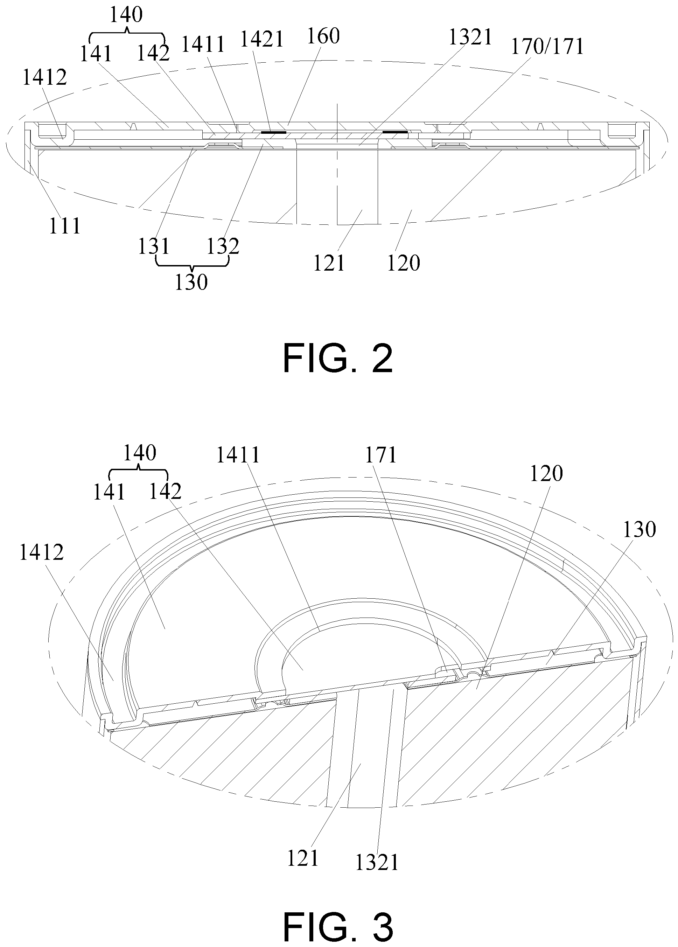

Referring to FIG. 1 and FIG. 2, the secondary battery 100 includes a casing 110, an electrode assembly 120, a current-collecting member 130, and a sealing plate 160.

A mounting chamber is formed inside the casing 110 for the electrode assembly 120, the electrolyte (not shown), and other components to be mounted. The mounting chamber may have an opening 112 at one end or may have openings 112 at both ends. Specifically, a size of the casing 110 may be determined according to a specific size of the electrode assembly 120, for example, with a diameter of 46mm and a height of 80mm, 95mm, 120mm, and other specifications. The casing 110 may have various shapes, such as cylindrical, prismatic, etc. The casing 110 may also be made of various materials, such as copper, iron, aluminum, steel, aluminum alloy, etc. In order to prevent the casing 110 from rusting during long-term use, a surface of the casing 110 may also be plated with a layer of anti-rust material such as metal nickel.

Referring to FIG. 1, in the secondary battery 100 provided by an embodiment of the disclosure, the casing 110 has a cylindrical structure and includes an end wall 113, a side wall 111 surrounding the end wall 113, and a cover plate assembly 140. Along a height direction of the casing 110, one end of the side wall 111 is fixedly connected to the end wall 113 to form a closed end, and the other end of the side wall 111 is provided with the opening 112. The cover plate assembly 140 is arranged at the opening 112 and seals the opening 112.

As shown in FIG. 1 and FIG. 2, the electrode assembly 120 is accommodated within the casing 110. The electrode assembly 120 is the component where electrochemical reactions occur in the secondary battery 100. The electrode assembly 120 is mainly formed by winding or laminating a positive electrode sheet and a negative electrode sheet, and a separator is usually provided between the positive electrode sheet and the negative electrode sheet. Preferably, in this embodiment, the electrode assembly 120 is formed by winding the positive electrode sheet, the negative electrode sheet, and the separator, and the winding cell through hole 121 is formed in a center region of the electrode assembly 120. The positive electrode sheet includes a positive current collector and a positive active material layer, and the positive active material layer is coated on a surface of the positive current collector. The positive current collector includes a positive coating region and a positive tab connected to the positive coating region. The positive coating region is coated with the positive active material layer, and the positive tab is not coated with the positive active material layer. The negative electrode sheet includes a negative current collector and a negative active material layer, and the negative active material layer is coated on a surface of the negative current collector. The negative current collector includes a negative coating region and a negative tab connected to the negative coating region. The negative coating region is coated with the negative active material layer, and the negative tab is not coated with the negative active material layer. Taking a lithium-ion battery as an example, a material of the positive current collector may be aluminum. The positive active material layer includes a positive active material, and the positive active material may be lithium cobalt oxide, lithium iron phosphate, ternary lithium, or lithium manganate. A material of the negative current collector may be copper. A negative active material layer includes a negative active material, and the negative active material may be carbon or silicon. A main base material of the separator may be PP or PE, etc. In order to protect and insulate the electrode assembly 120, an outer portion the electrode assembly 120 may also be covered with an insulating film, and the insulating film may be made of PP, PE, PET, PVC, or other polymer materials.

Referring to FIG. 1, in the secondary battery 100 provided by an embodiment of the disclosure, the electrode assembly 120 is sealingly mounted in the casing 110. The electrode assembly 120 is provided with a first tab 122 and a second tab 123 at both ends in a length direction, and the first tab 122 and the second tab 123 have opposite polarities. The first tab 122 faces the opening 112 of the casing 110 and is a negative tab. It should be noted that in other embodiments, the first tab 122 may also be a positive tab, and the second tab 123 may be a negative tab.

Referring to FIG. 1, in the secondary battery 100 provided by an embodiment of the disclosure, a penetrating terminal mounting hole is formed on the end wall 113 of the casing 110, and an electrode terminal 150 is sealingly and insulatingly fitted within the terminal mounting hole. As long as the sealing and insulating between the electrode terminal 150 and the end wall 113 can be achieved, the mounting manner of the electrode terminal 150 on the end wall 113 is not limited. The electrode assembly 120 has the second tab 123 on the side facing the end wall 113. One end of the electrode terminal 150 may be directly welded and connected to the second tab 123, or may be conductively connected to the second tab 123 through a current-collecting member, which is not specifically limited.

Referring to FIG. 2, in the secondary battery 100 provided by an embodiment of the disclosure, the current-collecting member 130 is arranged in the casing 110, located on one side of the electrode assembly 120 facing the cover plate assembly 140, and welded and connected to both the first tab 122 and the casing 110 to achieve electrical connection. The current-collecting member 130 may be welded and connected to the cover plate assembly 140, may be welded and connected to the side wall 111, or may be welded and connected to both the cover plate assembly 140 and the side wall 111, etc. A specific position and a welding area where the current-collecting member 130 is welded to the first tab 122 are not limited, as long as stable electrical connection requirements between the current-collecting member 130 and the first tab 122 can be achieved.

Referring to FIG. 2 and FIG. 3, the cover plate assembly 140 includes a first cover plate 141 and a second cover plate 142. The first cover plate 141 covers the opening 112, and an outer edge of the first cover plate 141 is sealingly connected to the side wall 111 of the casing 110. There may be various sealing methods, such as welding connection sealing, mechanical crimping sealing, etc. The first cover plate 141 includes a first through hole 1411, and the first through hole 1411 may be located in a center region of the first cover plate 141 or may be offset from the center region. A shape of the first through hole 1411 may also be various, for example, a square hole, a circular hole, or other irregular holes, etc. Preferably, in order to facilitate the machining and positioning of the first through hole 1411 on the first cover plate 141, in this embodiment, the first through hole 1411 has a circular hole structure and is arranged coaxially with the first cover plate 141.

Referring to FIG. 2 and FIG. 3, the second cover plate 142 is arranged on one side of the current-collecting member 130 away from the electrode assembly 120 and at least partially blocks the first through hole 1411. An outer edge of the second cover plate 142 is welded to the first cover plate 141. In an axial direction of the secondary battery 100, the second cover plate 142 may be located on one side of the first cover plate 141 away from the electrode assembly 120 or may be located on one side of the first cover plate 141 facing the electrode assembly 120, as long as it can partially block the first through hole 1411. The second cover plate 142 may have a disc shape matching the first through hole 1411 or may have other shapes capable of blocking the first through hole 1411, such as a rectangular plate, a polygonal plate, etc.

It should be noted that the current-collecting member 130 may be abutted against and welded to the first cover plate 141 or may be abutted against and welded to the second cover plate 142, as long as electrical connection between the current-collecting member 130 and the first cover plate 141 can be achieved.

Referring to FIG. 2, in an embodiment, the first cover plate 141 is provided with the liquid injection hole 170. A shape of the liquid injection hole 170 is not limited, for example, it may be a circular hole, an elongated hole, or a through slot, etc. In other embodiments, it may be the second cover plate 142 that is provided with the liquid injection hole 170. In still other embodiments, it may be both the first cover plate 141 and the second cover plate 142 that are provided with the liquid injection holes 170 As long as the liquid injection needs of the secondary battery 100 can be satisfied, the specific arrangement position of the liquid injection hole 170 is not limited. The sealing plate 160 is arranged on one side of the second cover plate 142 away from the electrode assembly 120, and the sealing plate 160 seals the liquid injection hole 170. The sealing plate 160 may be sealingly connected to the first cover plate 141 or may be sealingly connected to the second cover plate 142, as long as it is ensured that the sealing plate 160 can seal the liquid injection hole 170.

Referring to FIG. 2, in the axial direction of the secondary battery 100, the projection of the liquid injection hole 170 is located at the outer periphery of the winding cell through hole 121, that is, the projection of the liquid injection hole 170 does not overlap with a projection of the winding cell through hole 121. With this arrangement, the offset arrangement of the liquid injection hole 170 and the winding cell through hole 121 in the radial direction of the secondary battery 100 may be implemented. When electrolyte is injected through the liquid injection hole 170, a liquid flow impact force generated by the electrolyte is absorbed by the current-collecting member 130 or an end surface of the electrode assembly 120 at the position directly opposite to the liquid injection hole 170. In this way, the liquid flow impact at the position of the winding cell through hole 121 may be reduced or avoided, so that the probability of local collapse at the position of the winding cell through hole 121 is lowered, integrity of an electrode sheet interface at that position is improved, and the charge-discharge performance and cycle stability of the secondary battery 100 are further enhanced. Meanwhile, as the liquid injection hole 170 can directly enter the end surface of the electrode assembly 120 below or enter the end surface of the electrode assembly 120 after passing through the current-collecting member 130, compared to the approach where electrolyte directly enters an inner portion of the electrode assembly 120 from the winding cell through hole 121, in this approach, the electrolyte is enabled to infiltrate into the inner portion of the electrode assembly 120 from a tab stacking layer at the end surface of the electrode assembly 120. In this way, a wetting speed of the electrolyte in the inner portion of the electrode assembly 120 is increased, and a gas discharge speed in an inner portion of the casing 110 during a formation process is also increased, so that production efficiency of the secondary battery 100 is further improved.

Referring to FIG. 2 to FIG. 4, in the secondary battery 100 provided by an embodiment of the disclosure, the liquid injection hole 170 includes a second through hole 171 arranged on the second cover plate 142. At least a portion of the second through hole 171 is exposed to the first through hole 1411, and at least another portion communicates with the end surface of the electrode assembly 120 located on a side of the opening 112. The second through hole 171 may be completely exposed to the first through hole 1411 or may be partially exposed to the first through hole 1411. The second through hole 171 communicating with the end surface of the electrode assembly 120 means that the second through hole 171 communicates with the end surface of the electrode assembly 120 located on the side of the opening 112. The second through hole 171 may directly communicate with the end surface of the electrode assembly 120 below or may indirectly communicate with the end surface of the electrode assembly 120 through a hollow region arranged on the current-collecting member 130. The second through hole 171 may be of any shape such as an elongated hole, a circular hole, a rectangular hole, etc. By arranging the second through hole 171, communication between the liquid injection hole 170 and the end surface of the electrode assembly 120 in a vertical direction can be implemented. As such, a length of an electrolyte flow path is decreased, a flow velocity of the electrolyte entering the end surface of the electrode assembly 120 is increased, and that the wetting speed of the electrolyte in the inner portion of the electrode assembly 120 is increased.

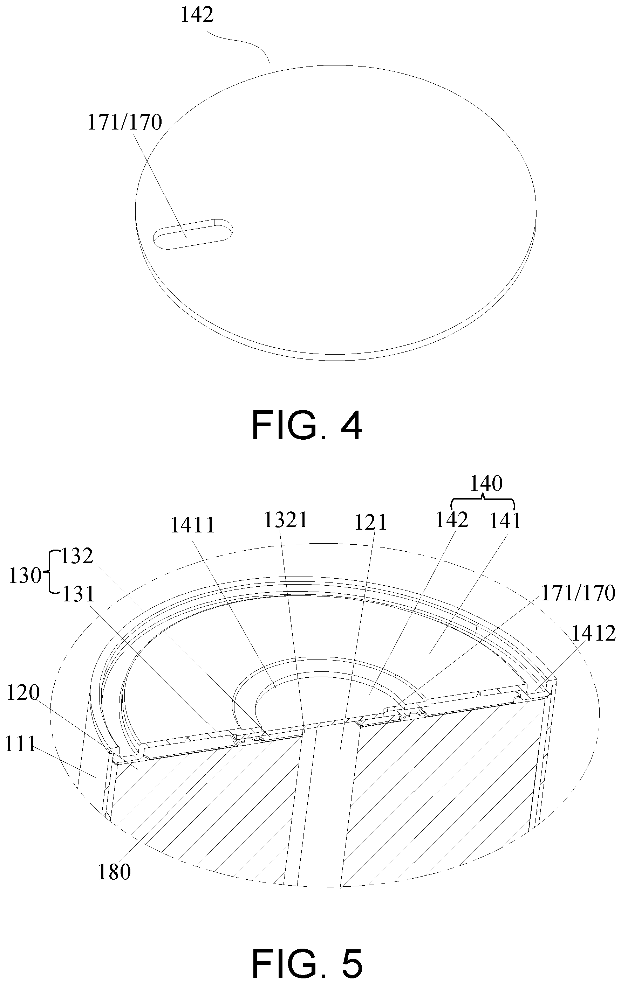

Specifically, referring to FIG. 3 and FIG. 4, in this embodiment, the second through hole 171 is an elongated hole. In a length direction of the elongated hole, one end of the elongated hole is exposed within the first through hole 1411, and the other end of the elongated hole extends along a radially outer side of the secondary battery 100. With this arrangement, under a same area, the elongated hole has a longer extending size in the radial direction of the electrode assembly 120, so that the uniformity of electrolyte wetting in the radial direction of the end surface of the electrode assembly 120 is improved, and that an improved liquid injection effect is obtained.

It should be noted that the number of the second through hole 171 arranged may be one or may be multiple. Preferably, in an embodiment, in order to improve the uniformity of liquid injection in the inner portion of the electrode assembly 120, a plurality of second through holes 171 are arranged. The second through holes 171 are arranged in an array along an axis of the electrode assembly 120, so that a relatively uniform liquid injection effect may be obtained in a circumferential direction of the electrode assembly 120.

Referring to FIG. 2 and FIG. 3, in the secondary battery 100 provided by an embodiment of the disclosure, in the axial direction of the secondary battery 100, the second cover plate 142 is arranged between the first cover plate 141 and the current-collecting member 130. The outer edge of the second cover plate 142 extends to below an outer periphery of the first through hole 1411 and abuts against a surface of the outer periphery of the first through hole 1411 facing the electrode assembly 120 side. A surface of the first cover plate 141 facing one side of the electrode assembly 120 at least partially blocks the second through hole 171. With this arrangement, when liquid injection is performed through the second through hole 171, in the radial direction of the secondary battery 100, the electrolyte may flow through the second through hole 171 into the end surface region of the electrode assembly 120 below the position where the second cover plate 142 and the first cover plate 141 abut against each other. In this way, liquid injection into the inner portion of the electrode assembly 120 is implemented, and the uniformity of liquid injection in the radial direction of the electrode assembly 120 is improved.

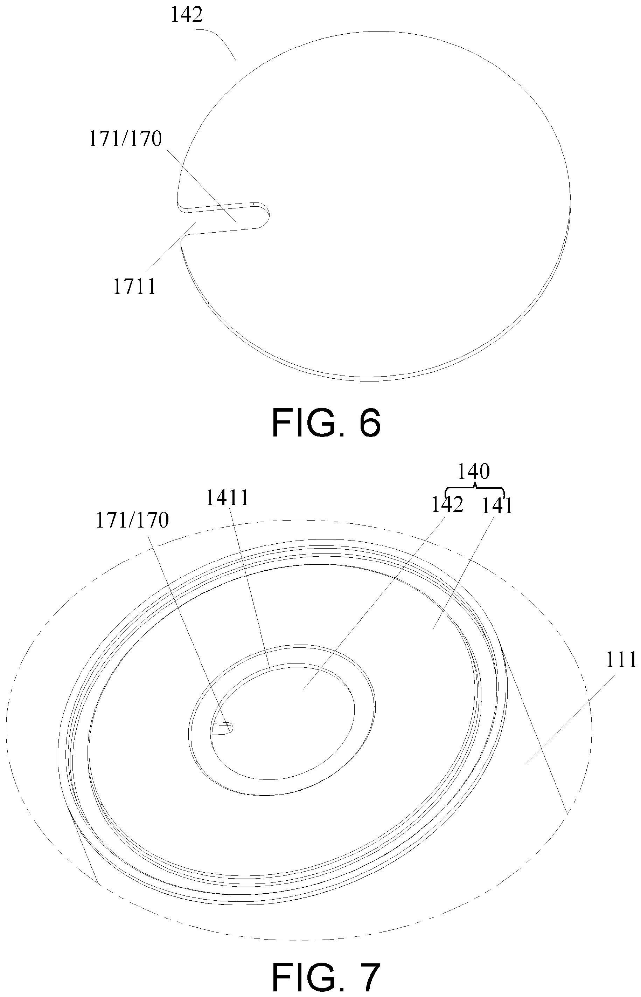

In order to further improve the liquid injection speed in the inner portion of the electrode assembly 120, preferably, referring to FIG. 5 and FIG. 6, in the secondary battery 100 provided by an embodiment of the disclosure, the second through hole 171 extends in the radial direction of the secondary battery 100 and penetrates the outer edge of the second cover plate 142. With this arrangement, a penetrating opening 1711 is formed on one side of the second through hole 171 away from the first through hole 1411. The arrangement of the penetrating opening 1711 may lower the resistance of the electrolyte entering the end surface of the electrode assembly 120, so that the liquid injection speed in the inner portion of the electrode assembly 120 is further improved.

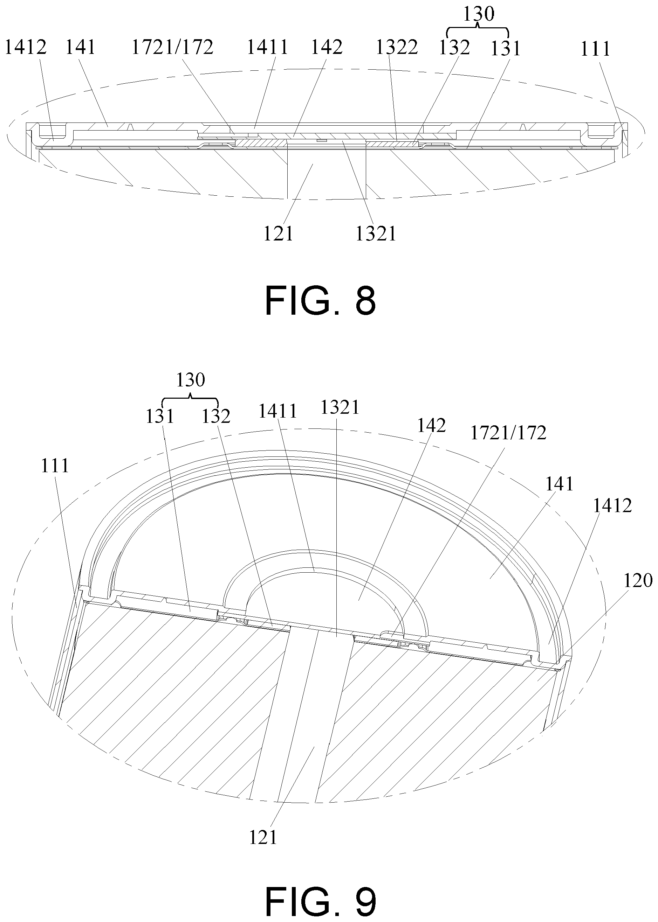

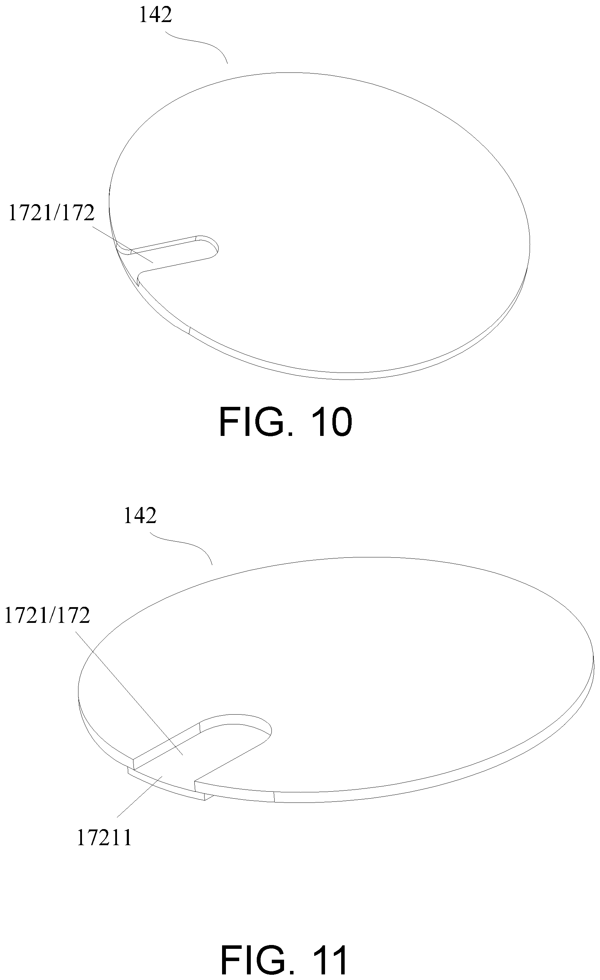

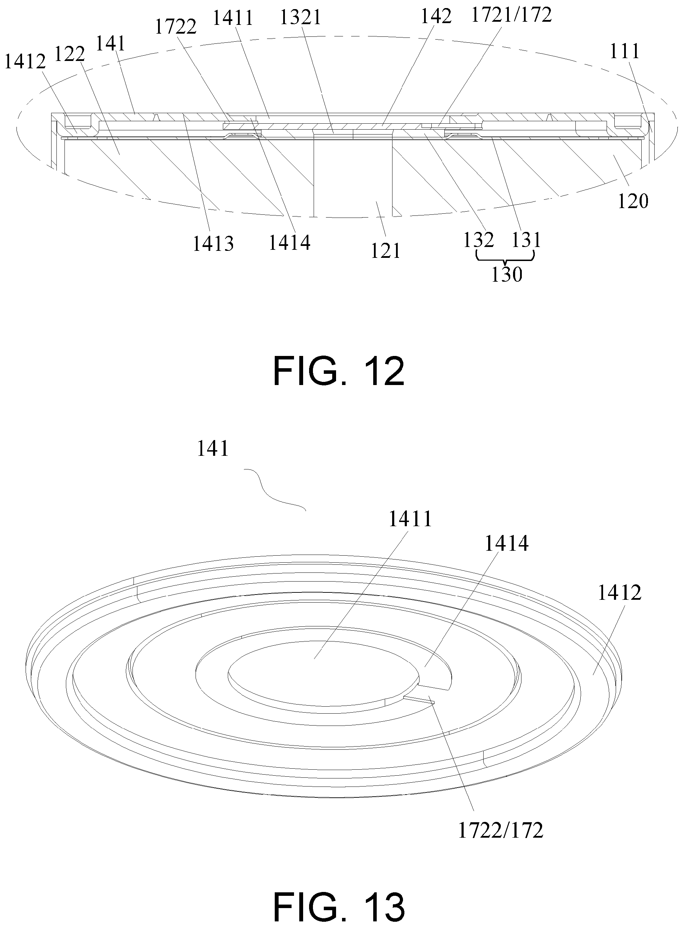

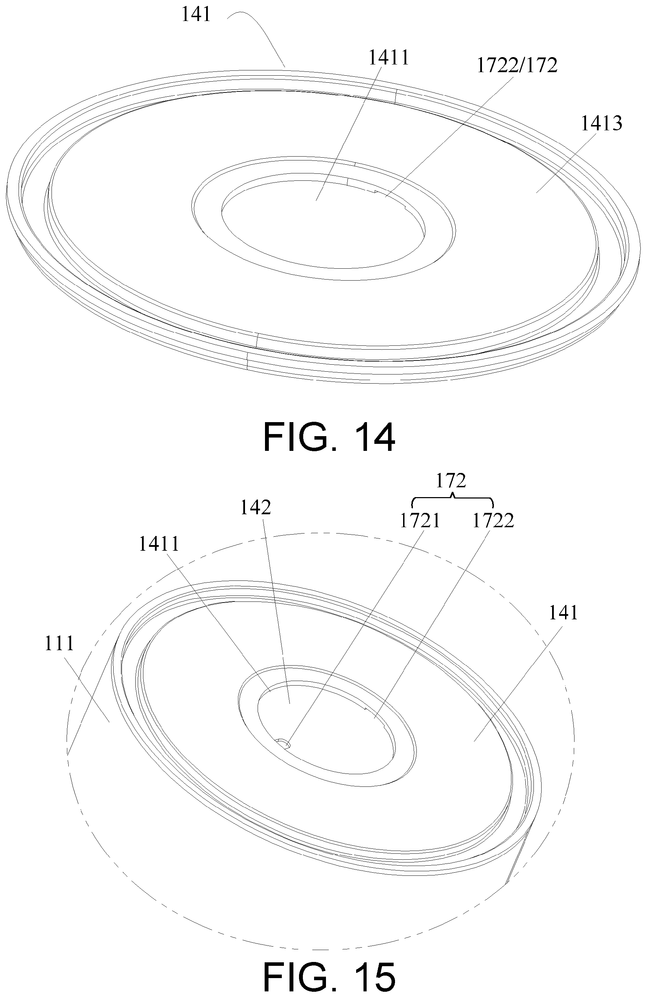

Different from the embodiment shown in FIG. 3, in the secondary battery 100 provided by an embodiment of the disclosure, referring to FIG. 12 and FIG. 13, the liquid injection hole 170 includes a through groove 172 arranged on the first cover plate 141. One end of the through groove 172 communicates with the first through hole 1411, and the other end extends in the radial direction of the secondary battery 100 and communicates with the end surface of the electrode assembly 120 located on the side of the opening 112. A cross-sectional shape of the through groove 172 is not limited, for example, it may be a circular cross section, a rectangular cross section, etc. In other embodiments, the through groove 172 may be arranged on the second cover plate 142, as shown in FIG. 9 and FIG. 10. In some other embodiments, the through groove 172 may also be partially arranged on the first cover plate 141 and partially arranged on the second cover plate 142, as shown in FIG. 15. By arranging the through groove 172, when liquid injection is performed through the liquid injection hole 170, the electrolyte is delivered through the through groove 172 to the position on the end surface of the electrode assembly 120 below away from the winding cell through hole 121, so that the wetting effect of the electrode sheets at the radially outer region of the winding cell through hole 121 is further improved.

Specifically, referring to FIG. 9 to FIG. 11, in the secondary battery 100 provided by an embodiment of the disclosure, the through groove 172 includes a second recess 1721 arranged on the second cover plate 142, and the second recess 1721 is located on one side of the second cover plate 142 facing the first cover plate 141. At least a portion of the second recess 1721 is exposed to the first through hole 1411, and another portion of the second recess 1721 extends in the radial direction of the secondary battery 100 and forms a recess opening 17211 facing the outer periphery of the second cover plate 142. In this embodiment, the second recess 1721 may be a recess structure machined by material removal in a thickness direction of the second cover plate 142, as shown in FIG. 10. In another embodiment, the through groove 172 may also be a recess structure formed by machining a notch on the second cover plate 142 and then sealing the notch on the side facing the electrode assembly 120 with a baffle plate, as shown in FIG. 11. The second recess 1721 may be an approximately elongated groove shape extending in the radial direction of the second cover plate 142, or may be an approximately rectangular groove shape, etc. Optionally, in this embodiment, the second recess 1721 is an approximately elongated groove structure. Further, in a length direction of the second recess 1721, one end of the second recess 1721 is exposed to the first through hole 1411, and the other end of the second recess 1721 extends in the radial direction of the secondary battery 100 and forms the recess opening 17211 facing the outer periphery of the second cover plate 142. When liquid injection is performed through the second recess 1721, the electrolyte enters from the end where the second recess 1721 communicates with the first through hole 1411, flows out from the recess opening 17211 of the second recess 1721, and finally enters the end surface region of the electrode assembly 120 below the recess opening 17211. By arranging the second recess 1721, the liquid injection uniformity of the electrode assembly 120 in the radial direction may also be improved.

Referring to FIG. 12 to FIG. 14, in the secondary battery 100 provided by an embodiment of the disclosure, the through groove 172 includes a first recess 1722 arranged on the first cover plate 141 and located on one side of the first cover plate 141 facing the second cover plate 142. In the radial direction of the secondary battery 100, one end of the first recess 1722 communicates with the first through hole 1411, and the other end of the first recess 1722 extends in the radial direction and communicates with the end surface of the electrode assembly 120 below. The first recess 1722 may be a rectangular groove structure, a trapezoidal groove structure, a V-shaped groove structure, etc. extending in the radial direction of the secondary battery 100. In the radial direction of the secondary battery 100, one end of the first recess 1722 passes through an inner wall of the first through hole 1411 to communicate with the first through hole 1411. The other end of the first recess 1722 extends toward the side away from the first through hole 1411 and communicates with the end surface of the electrode assembly 120 below.

Specifically, referring to FIG. 12 to FIG. 14, the first cover plate 141 includes a cover portion 1413 and a second protrusion 1414. The cover portion 1413 is arranged around an outer periphery of the second protrusion 1414, and the second protrusion 1414 protrudes toward the electrode assembly 120 side relative to the cover portion 1413. The first through hole 1411 passes through a center region of the second protrusion 1414, and a surface of the second protrusion 1414 facing the electrode assembly 120 side abuts against an edge region of the second cover plate 142 below. The first recess 1722 is arranged on one side of the second protrusion 1414 facing the electrode assembly 120 and passes through a region where the second protrusion 1414 protrudes from the cover portion 1413 in the radial direction of the secondary battery 100. The number of the first recess 1722 is not limited, it may be one, or may be multiple arranged around the first through hole 1411. The number is specifically determined according to actual liquid injection needs. By arranging the first recess 1722 on the first cover plate 141, when liquid injection is performed through the first recess 1722, the electrolyte enters from the end where the first recess 1722 communicates with the first through hole 1411 and then enters the end surface region of the electrode assembly 120 below.

It should be noted that under the premise of satisfying the liquid injection needs of the electrode assembly 120, it may be that only the second recess 1721 is arranged on the second cover plate 142, as shown in FIG. 9. It may also be that only the first recess 1722 is arranged on the first cover plate 141, as shown in FIG. 14. It may also be that both the second recess 1721 is arranged on the second cover plate 142 and the first recess 1722 is arranged on the first cover plate 141, as shown in FIG. 12.

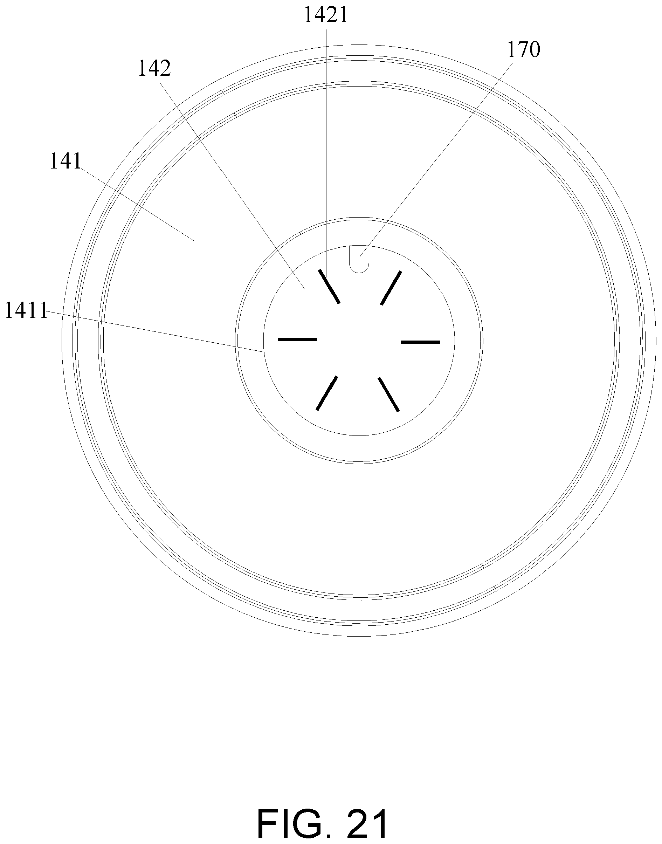

Referring to FIG. 2, FIG. 16, and FIG. 21, in the secondary battery 100 provided by an embodiment of the disclosure, in the axial direction of the secondary battery 100, the current-collecting member 130 includes a current-collecting body 131 and a cover plate welding portion 132. The current-collecting body 131 is arranged around an outer periphery of the cover plate welding portion 132 and is conductively connected to the cover plate welding portion 132. This conductive connection method may be welding connection or integral molding connection, which is not specifically limited. The current-collecting body 131 is welded to the first tab 122 below, so that electrical connection with the electrode assembly 120 is implemented. The cover plate welding portion 132 abuts against and is welded to the second cover plate 142 to form a first welding mark 1421. The first welding mark 1421 is spaced apart from the liquid injection hole 170. That is, in the axial direction of the secondary battery 100, a projection of the first welding mark 1421 does not overlap with the projection of the liquid injection hole 170, as shown in FIG. 21. A specific distribution position and a welding mark trajectory of the first welding mark 1421 are not limited and are subject to meeting the welding strength requirements between the current-collecting member 130 and the second cover plate 142. Through such an arrangement, position interference between the liquid injection hole 170 and the first welding mark 1421 is avoided. A surface of the first welding mark 1421 is coated with a sealing adhesive. Through such an arrangement, welding slag at the position of the first welding mark 1421 may be fixed onto the surface of the second cover plate 142 through the sealing adhesive. Therefore, the electrolyte overflowing from the liquid injection hole 170 during the liquid injection process is prevented from carrying the welding slag back into the liquid injection hole 170, so that the risk of failure of the secondary battery 100 is reduced.

Referring to FIG. 2, in the secondary battery 100 provided by an embodiment of the disclosure, the sealing plate 160 covers and seals the first welding mark 1421. Through such an arrangement, the sealing plate 160 is allowed to simultaneously cover and seal the liquid injection hole 170 and the first welding mark 1421. Therefore, the liquid injection hole 170 is sealed and corrosion of the first welding mark 1421 is prevented, so that the welding strength of the first welding mark 1421 is ensured.

Referring to FIG. 8, FIG. 17, and FIG. 18, in the secondary battery 100 provided by an embodiment of the disclosure, a thickness of the cover plate welding portion 132 is greater than a thickness of the current-collecting body 131. The cover plate welding portion 132 protrudes toward a side of the second cover plate 142 relative to the current-collecting body 131. A center region of the cover plate welding portion 132 includes a center hole 1321 that communicates with the winding cell through hole 121. The center hole 1321 may be arranged coaxially with the winding cell through hole 121 or may be arranged non-coaxially. Preferably, to facilitate positioning and mounting between the cover plate welding portion 132 and the winding cell through hole 121, in this embodiment, the center hole 1321 is arranged coaxially with the winding cell through hole 121. An edge region of the cover plate welding portion 132 includes a third recess 1322 extending in a radial direction of the cover plate welding portion 132. One end of the third recess 1322 communicates with the center hole 1321 to achieve communication with the winding cell through hole 121, and the other end of the third recess 1322 communicates with the liquid injection hole 170. It should be noted that on the radially outer side of the cover plate welding portion 132, a gas storage space 124 is formed between the first cover plate 141 and the end surface of the electrode assembly 120, as shown in FIG. 8. In this embodiment, the third recess 1322 communicates with the liquid injection hole 170, specifically referring to the third recess 1322 communicating with the gas storage space 124, so that communication between the third recess 1322 and the liquid injection hole 170 is implemented.

By arranging the third recess 1322 on the cover plate welding portion 132, when the electrolyte is injected into the inner portion of the electrode assembly 120 through the liquid injection hole 170, the electrolyte may partially fill into the gas storage space 124 in the later stage of injection. At this time, the electrolyte in the gas storage space 124 may flow into the winding cell through hole 121 through the third recess 1322, so that liquid injection in the center region of the electrode assembly 120 is implemented. In this way, the wetting speed of the center region of the electrode assembly 120 is improved, and the uniformity of liquid injection in the inner portion of the electrode assembly 120 is also enhanced.

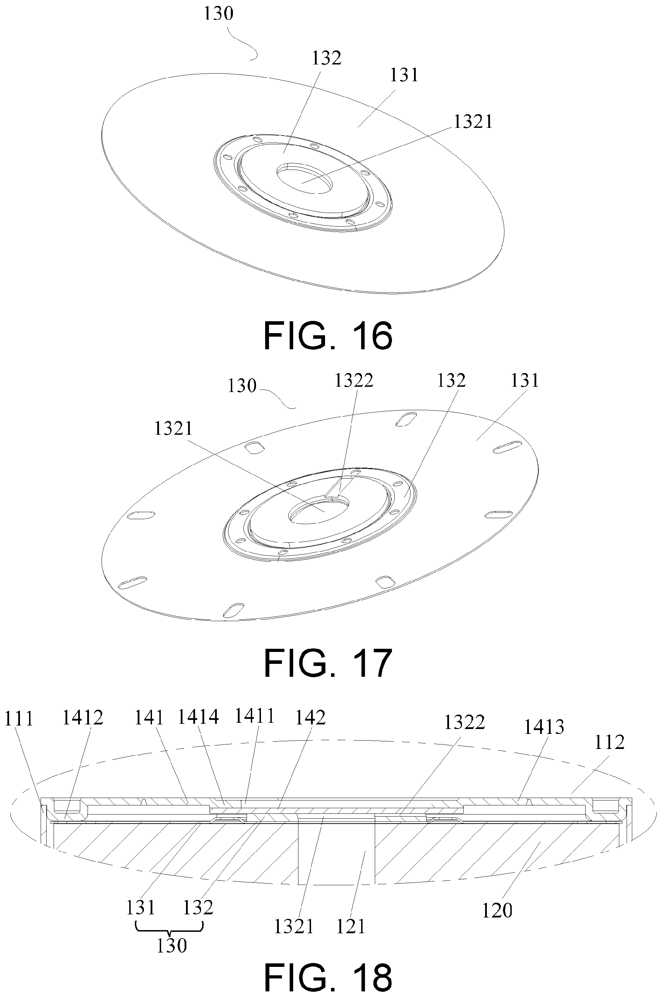

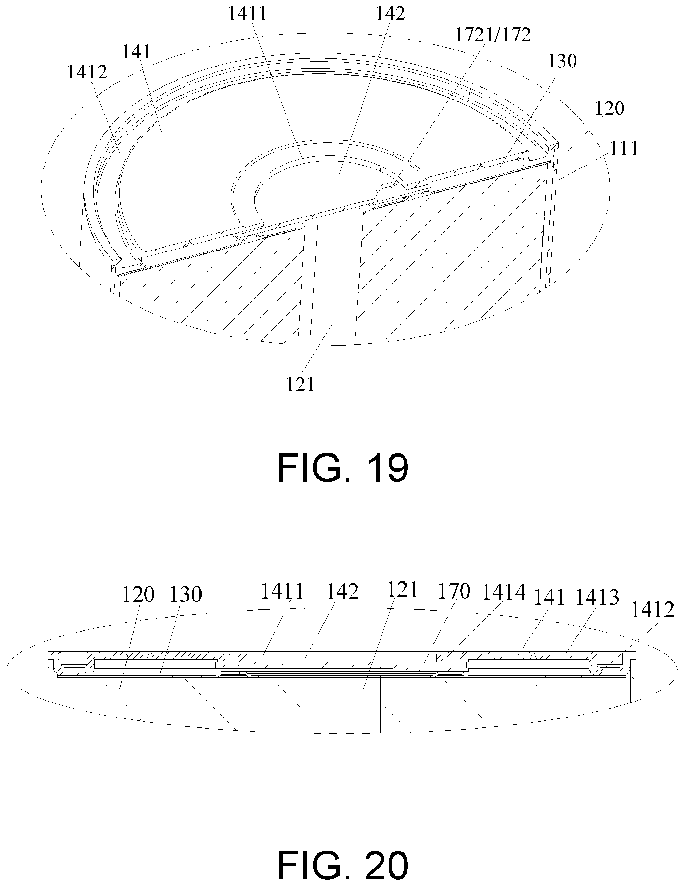

Referring to FIG. 18 to FIG. 20, in the secondary battery 100 provided by an embodiment of the disclosure, the outer periphery of the first cover plate 141 further includes a first protrusion 1412 that matches the opening 112. The first protrusion 1412 protrudes toward the electrode assembly 120 side and is welded to the current-collecting member 130. The first protrusion 1412 is arranged around an outer periphery of the cover portion 1413 and may be integrally press-formed and connected to or welded and connected to the cover portion 1413. A shape of an outer peripheral surface of the first protrusion 1412 matches a shape of the side wall 111 of the casing 110. The outer peripheral surface of the first protrusion 1412 and the inner wall of the side wall 111 are arranged opposite to each other in the circumferential direction. In this way, welding of the side wall 111 and the first protrusion 1412 from the outside of the casing 110 may be performed, and sealed connection between the outer periphery of the first cover plate 141 and the side wall 111 is thus implemented. A surface of the first protrusion 1412 facing the electrode assembly 120 side abuts against and is welded to the surface of the current-collecting member 130 below that faces away from the electrode assembly 120 side. Through such an arrangement, the welding position between the current-collecting member 130 and the first cover plate 141 is arranged away from the liquid injection hole 170 at the first through hole 1411, so that the probability of welding slag entering the liquid injection hole 170 with the electrolyte is reduced. Meanwhile, since the outer periphery of the current-collecting member 130 is welded to the first cover plate 141, the center region of the current-collecting member 130 may no longer be provided with the cover plate welding portion 132, as shown in FIG. 19 and FIG. 20. With this arrangement, without needing to provide the third recess 1322, the electrolyte in the gas storage space 124 may flow into the winding cell through hole 121, so that the wetting speed and uniformity of wetting of the electrode assembly 120 are further improved.

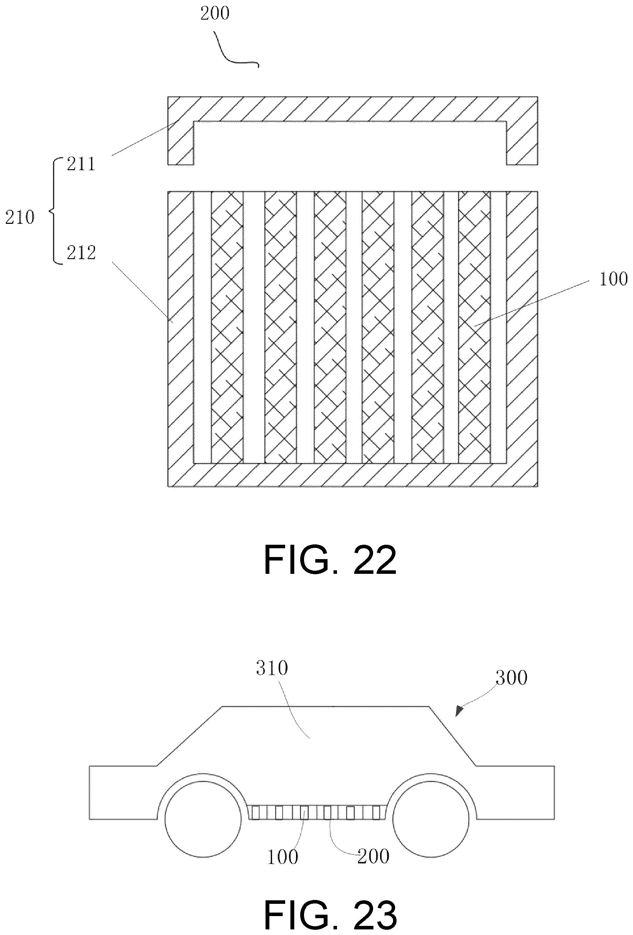

Referring to FIG. 22, in the battery pack 200 provided by an embodiment of the disclosure, the battery pack 200 includes a box 210 and at least one secondary battery 100. The box 210 includes a first box portion 211 and a second box portion 212. The first box portion 211 and the second box portion 212 are mutually covered to form an accommodation space. A plurality of secondary batteries 100 are accommodated in the accommodation space, and the secondary batteries 100 may be connected in series and/or in parallel.

Referring to FIG. 23, in the electronic device 300 provided by an embodiment of the disclosure, the electronic device 300 includes a working portion 310 and the battery pack 200. The working portion 310 is electrically connected to the battery pack 200 to obtain electrical energy support. The working portion 310 may be a unit component that can obtain the electric energy of the battery pack 200 and perform corresponding work, such as a blade rotating unit of a fan, a dust collection working unit of a vacuum cleaner, a wheel drive unit in an electric vehicle, etc. The electronic device 300 may be a vehicle, a mobile phone, a portable device, a notebook computer, a ship, a spacecraft, an electric toy, an electric tool, etc. The vehicle may be but not limited to a fuel vehicle, a gas vehicle, or a new energy vehicle, and the new energy vehicle may be a pure electric vehicle, a hybrid vehicle, or a range-extended vehicle, etc. The spacecraft includes but not limited to an airplane, a rocket, a space shuttle, a spaceship, etc. The electric toy includes but not limited to a stationary or mobile electric toy, for example, a game machine, an electric car toy, an electric boat toy, an electric airplane toy, etc. The electric tool includes a metal cutting electric tool, a grinding electric tool, an assembling electric tool, and an electric tool for railway use, such as an electric drill, an electric grinder, an electric wrench, an electric screwdriver, an electric hammer, an impact drill, a concrete vibrator, an electric planer, etc. The above electronic device 300 is not particularly limited in the embodiments of the disclosure. In the electronic device 300 provided by an embodiment of the disclosure, the electronic device 300 is a vehicle, the working portion 310 is the vehicle body, and the battery pack 200 is fixedly mounted on the vehicle body to provide a driving force for the vehicle to achieve the operation of the vehicle.

In the secondary battery provided by the disclosure, in the axial direction of the secondary battery, since the projection of the liquid injection hole is located at the outer periphery of the winding cell through hole, offset arrangement of the liquid injection hole and the winding cell through hole in the radial direction may be implemented. Through such an arrangement, when electrolyte is injected through the liquid injection hole, the impact force generated by the highspeed electrolyte is absorbed by the current-collecting member or the end surface of the electrode assembly at the position directly opposite to the liquid injection hole. In this way, the liquid flow impact on the position of the winding cell through hole may be reduced, the probability of collapse at the position of the winding cell through hole is correspondingly lowered, and the integrity of the electrode sheet interface at that position is improved, so that the charge-discharge performance and cycle stability of the secondary battery are enhanced. Therefore, some practical problems in the related art are effectively overcome, and that the disclosure exhibits favorable utilization value and use significance.

## Claims

1. A secondary battery (100), **characterized in that** the secondary battery (100) comprising:
a casing (110) comprising a side wall (111) and a cover plate assembly (140), wherein the side wall (111) comprises an opening (112) at one end in an axial direction of the secondary battery (100), the cover plate assembly (140) seals the opening (112), the cover plate assembly (140) includes a first cover plate (141) and a second cover plate (142), the first cover plate (141) covers the opening (112), is sealingly connected to the side wall (111), and comprises a first through hole (1411), the second cover plate (142) at least partially blocks the first through hole (1411) and is welded to the first cover plate (141);
an electrode assembly (120) is sealingly mounted in the casing (110) and having a winding cell through hole (121);
a current-collecting member (130) arranged on a side of the electrode assembly (120) facing the cover plate assembly (140) and electrically connected to the electrode assembly (120) and the casing (110); and
a sealing plate (160) arranged on a side of the second cover plate (142) away from the electrode assembly (120),
wherein the first cover plate (141) and/or the second cover plate (142) is provided with a liquid injection hole (170), and in the axial direction of the secondary battery (100), a projection of the liquid injection hole (170) is located at an outer periphery of the winding cell through hole (121), and the sealing plate (160) seals the liquid injection hole (170).

2. The secondary battery (100) according to claim 1, wherein the liquid injection hole (170) comprises a second through hole (171) arranged in the second cover plate (142), at least a portion of the second through hole (171) is exposed to the first through hole (1411), and at least another portion communicates with an end surface of the electrode assembly (120) located on a side of the opening (112).

3. The secondary battery (100) according to claim 1 or 2, wherein in the axial direction of the secondary battery (100), the second cover plate (142) is arranged between the first cover plate (141) and the current-collecting member (130), an outer edge of the second cover plate (142) abuts against an outer periphery of the first through hole (1411), and a surface of the first cover plate (141) facing the electrode assembly (120) at least partially blocks the second through hole (171).

4. The secondary battery (100) according to any one of claims 1 to 3, wherein the second through hole (171) extends in a radial direction of the secondary battery (100) and penetrates the outer edge of the second cover plate (142).

5. The secondary battery (100) according to any one of claims 1 to 4, wherein in the axial direction of the secondary battery (100), the second cover plate (142) is arranged between the first cover plate (141) and the current-collecting member (130), an outer edge of the second cover plate (142) abuts against an outer periphery of the first through hole (1411), and the liquid injection hole (170) comprises a through groove (172) arranged in the first cover plate (141) and/or the second cover plate (142), one end of the through groove (172) communicates with the first through hole (1411), and the other end extends in a radial direction of the secondary battery (100) and communicates with an end surface of the electrode assembly (120) located on a side of the opening (112).

6. The secondary battery (100) according to any one of claims 1 to 5, wherein the through groove (172) comprises a second recess (1721) arranged in the second cover plate (142), the second recess (1721) is located on a side of the second cover plate (142) facing the first cover plate (141), and at least a portion of the second recess (1721) is exposed to the first through hole (1411).

7. The secondary battery (100) according to any one of claims 1 to 6, wherein the through groove (172) comprises a first recess (1722) arranged in the first cover plate (141), the first recess (1722) is located on a side of the first cover plate (141) facing the second cover plate (142), and the first recess (1722) communicates with the first through hole (1411).

8. The secondary battery (100) according to any one of claims 1 to 7, wherein the current-collecting member (130) comprises a current-collecting body (131) and a cover plate welding portion (132) welded to the second cover plate (142) to form a first welding mark (1421), the first welding mark (1421) is spaced apart from the liquid injection hole (170), and a surface of the first welding mark (1421) is coated with a sealing adhesive.

9. The secondary battery (100) according to any one of claims 1 to 8, wherein the sealing plate (160) covers the first welding mark (1421).

10. The secondary battery (100) according to any one of claims 1 to 9, wherein a thickness of the cover plate welding portion (132) is greater than a thickness of the current-collecting body (131), the cover plate welding portion (132) protrudes toward a side of the second cover plate (142) relative to the current-collecting body (131), a center region of the cover plate welding portion (132) comprises a center hole (1321) communicating with the winding cell through hole (121), and an edge region of the cover plate welding portion (132) comprises a third recess (1322), and both ends of the third recess (1322) communicate with the liquid injection hole (170) and the center hole (1321).

11. A battery pack (200), **characterized in that** the battery pack (200) comprising the secondary battery (100) according to any one of claims 1 to 10.

12. An electronic device (300), **characterized in that** the electronic device (300) comprising the battery pack (200) according to claim 11.
